# EUROPEAN PATENT SPECIFICATION

(11) **EP 0 291 200 B1**
(45) Date of publication and mention of the grant of the patent: **25.01.1995**
(21) Application number: 88303832.5
(22) Date of filing: 28.04.1988
(51) Int. Cl.: G02F 1/01, G02F 1/11, G02F 1/125, G02B 6/10

(54) **Fiber optic inter-mode coupling single-sideband frequency shifter**
Fiberoptischer, zwischen Moden koppelnder Einseitenband-Frequenzumsetzer
Convertisseur à fibre optique et à bande latérale unique avec couplage entre les modes

(30) Priority: 11.05.1987 US 48142
(43) Date of publication of application: 17.11.1988
(73) Proprietor: THE BOARD OF TRUSTEES OF THE LELAND STANFORD JUNIOR UNIVERSITY, Stanford California 94305 (US)
(72) Inventor: Kim, Byoung Y., Menlo Park California 94025 (US); Engan, Helge E., Palo Alto California 94306 (US); Shaw, Herbert J., Stanford California 94305 (US); Blake, James N., Mountain View California 94041 (US)
(74) Representative: Rushton, Ronald

(56) References cited:
- EP-A- 0 144 190
- EP-A- 0 153 124
- EP-A- 0 183 420
- EP-A- 0 230 369
- OPTICS LETTERS, vol. 11, no. 6, June 1986 ; B.Y. KIM et al. : "All-fiber acousto-optic frequency shifter, pp. 389-391.

## Description

### Field of the Invention

The present invention relates generally to fiber optic devices and, more specifically, to devices which couple light energy from an optical signal input into an optical fiber in one mode at one frequency to a different mode at a shifted frequency.

### Background of the Invention

Fiber optic frequency shifters are useful devices for a variety of fiber optic sensor and signal processing applications, such as in fiber optic gyros and the like. It has been shown, for example, in European Patent Application Number 84308010.2, filed November 20, 1984, published on June 12, 1985 under Publication No. 0144190 and assigned to the assignee of the present application, that light launched in one propagation mode of a fiber can be coupled to another propagation mode and shifted in frequency by propagating an acoustic wave along the length of the fiber to cause a periodic stress of the fiber. The light is shifted in frequency by an amount equal to the frequency of the acoustic wave.

As set forth in the above-referenced copending application, if the acoustic wave propagates along the fiber in the same direction as an optical signal propagates through the fiber, light traveling in a first propagation mode in the fiber at a first phase velocity and at a first frequency is coupled to a second propagation mode at a second phase velocity higher than the first phase velocity and is shifted downward in frequency. Similarly, if the light is originally propagating in the fiber in a faster propagation mode, the light is coupled to a slower propagation mode at a higher frequency. On the other hand, if the acoustic wave propagates along the fiber in a direction opposite the direction that an optical signal is propagating through the fiber, light traveling in a slower propagation mode is coupled to a faster propagation mode and is shifted upward in frequency. Similarly, light traveling in a faster propagation mode opposite the direction of propagation of an acoustic wave is coupled to a slower propagation mode and is shifted downward in frequency.

For optimal coupling to occur in the frequency shifter described in the above-referenced copending application, the acoustic wavelengths in the direction of propagation of the optical signal through the fiber should be substantially equal to the beat length of an optical signal traveling through the fiber. As is well known, when light travels through a fiber in more than one propagation mode, the light travels through the fiber at a different phase velocity for each of the different propagation modes. Light traveling in the slower propagation mode travels at a lower phase velocity than light in a faster propagation mode. Thus, a light signal having a fixed frequency will have a longer wavelength in the faster propagation mode than it has in the slower propagation mode. As the light propagates down the length of the fiber, a phase difference will thus develop between the light in the two modes. At spatially periodic distances, the light in the two modes will be in phase. The distance between successive locations where the light is in phase is referred to as the beat length of the fiber for the two modes at a specified frequency.

For the devices discussed in the above-mentioned copending application, this is the beat length that must match the acoustic wavelength in order to achieve optical coupling of energy between the modes. The light propagating along a fiber in one propagation mode is converted to light propagating in a second propagation mode by applying a periodic, traveling wave, compressive force along a segment of the length of the fibers. A more complete description of this technique is found in "Single-Sideband Frequency Shifting in Birefringent Optical Fiber," W. P. Risk, et al., SPIE Vol. 478 - Fiber Optic and Laser Sensors II (1984), pp. 91-97.

It has also been disclosed in European Patent Application No. 87300269.5, filed on January 13, 1987, not yet published and assigned to the assignee of the present application, an improved method of shifting the frequency of an optical signal propagating in a multimode optical fiber. The invention disclosed in the above-referenced copending application provides for more efficient utilization of the energy input into the fiber to cause the coupling and has a broader optical bandwidth, thereby allowing a broader range of frequencies.

The invention disclosed in European Patent No. 87300269.5 comprises a multimode optical fiber which has two spatial modes of propagation. An optical signal is introduced into the fiber in one of the two propagation modes. A source of modulation energy is applied to a segment of the fiber to periodically form microbends in the fiber so as to induce a first order group flexural wave that propagates along the length of the fiber in the form of traveling microbends having a microbend propagation velocity. The propagation velocity and the frequency of the microbend wave are selected to provide a microbend propagation constant which is substantially equal to the difference in the propagation constants of the two propagation modes for the optical signal traveling within the fiber. Thus, the propagation wavelength of the traveling microbend wave is substantially equal to the beat length between the two propagation modes of the optical signal within the fiber. The additive effect of the microbends comprising the microbend wave causes an optical signal input into the optical fiber at a first frequency in one of the two propagation modes to be coupled to an optical signal in the other of the two propagation modes at a second frequency which is either the sum of or the difference between the first frequency and the frequency of the traveling microbend.

As set forth in the devices disclosed in European Patent No. 87300269.5, the optical signal can be input into the optical fiber in either the lower order LP₀₁ propagation mode or a higher order (e.g., LP₁₁) propagation mode. When the periodic microbend wave is propagating along the length of the fiber in the same direction as the optical signal is propagating in the fiber, the optical energy in the first order LP₀₁ mode at a first phase velocity is coupled to a higher order mode (e.g., the LP₁₁ mode) at a higher phase velocity and is shifted downward in frequency from the first frequency to a second frequency which is lower than the first frequency. The second frequency is equal to the difference between the first frequency and the frequency of the periodic microbend wave. When the optical energy is input into the fiber in the second order LP₁₁ mode and propagates in the same direction as the propagation of the periodic microbend wave, optical energy is coupled from the second order LP₁₁ mode to the first order LP₀₁ mode with a shift upward in frequency to a second frequency and a corresponding decrease in phase velocity. The second frequency in this case is equal to the sum of the first frequency and the frequency of the periodic microbend wave.

On the other hand, if the optical energy is input into the fiber and propagates in the opposite direction as the direction of propagation of the periodic microbend wave, optical energy input into the higher order LP₁₁ mode at a first frequency is coupled to the first order LP₀₁ mode at a second frequency lower than the first frequency and the phase velocity decreases. The second frequency is equal to the first frequency minus the frequency of the traveling periodic microbend wave. Similarly, optical energy input into the fiber at a first frequency in the first order LP₀₁ mode and propagated in a direction opposite the direction of propagation of the travelling microbend wave is coupled from the first order LP₀₁ mode to the second order LP₁₁ mode and is shifted upward in frequency from the first frequency to a second frequency equal to the sum of the first frequency and the frequency of the periodic microbending and the phase velocity is increased. The European Patent Application No. 87300269.5 is incorporated herein by reference.

Although the invention disclosed in European Patent No. 87300269.5 provides for an efficient method of shifting the frequency of an optical signal propagating in a multimode optical fiber, it has been found to be defective for the shifting of an optical signal in a birefringent single-mode optical fiber which propagates light in two different polarisation modes. The need has thus developed for a method of shifting- the frequency of an optical signal propagating in a birefringent single-mode optical fiber and an apparatus therefor, which operates over a broad range of optical frequencies and over a broad range of modulation frequencies.

We acknowledge that Optics Letters, vol. 11, No. 6, June 1986, B.Y. Kim et al, "All-fiber acousto-optic frequency shifter", pages 389-391, discloses a multi-mode fiber with first order flexural wave propagation, as defined in the pre-characterising portion of Claim 1.

The present invention is an improvement over known methods of shifting the frequency of an optical signal propagating in an optical fiber, in particular in a birefringent, single-mode optical fiber.

The present invention is the apparatus of Claim 1 and the method of Claim 17, and provides for more efficient utilisation of the energy input into the fiber to cause the coupling.

The present invention can also have a broader optical bandwidth and is thus usable over a broader range of frequencies.

The periodic lateral couple of squeezing forces is in effect a centripetal couple of squeezing forces, causing the second order flexural wave to propagate within the fiber. Preferably, the centripetal squeezing force is orientated at an angle of substantially 45° with respect to the axes of birefringence of the birefringent single-mode optical fiber. The propagation velocity and the frequency of the travelling flexural wave are selected to provide a travelling flexural wave propagation constant which is substantially equal to the difference in the propagation constants of the two propagation modes for the optical signal travelling within the fiber. Thus, the propagation wavelength of the travelling flexural wave is substantially equal to the beat length between the two propagation modes of the optical signal within the fiber. The additive effect of the squeezing forces comprising the travelling squeezing wave causes an optical signal input into the optical fiber at a first frequency in one of the two propagation modes to be coupled to an optical signal in the other of the two propagation modes at a second frequency which is either the sum of or the difference between the first frequency and the frequency of the travelling flexural wave.

The present invention is particularly advantageous in that it operates over a broad range of optical frequencies and over a broad range of modulation frequencies. In a preferred embodiment of the present invention, the periodic squeezing wave is introduced into the fiber by two horns bonded to a portion of the fiber at diametrically opposed locations on the fiber. The horns are caused to vibrate at a frequency which is selected to generate a series of periodic squeezing forces having a propagation constant substantially equal to the difference in the propagation constants of the two propagation modes in the optical fiber.

In one preferred embodiment, the horns are acoustic horns which are coupled to the optical fiber via a fused quartz rod. The fused quartz rod of each acoustic horn has a first end which has substantially the same diameter as the optical fiber and which is fused to only one side of the optical fiber. The quartz rod has a second end which is substantially larger than the first end and which has a piezoelectric transducer (PZT) bonded thereto. When an electrical signal is applied to the PZT, an acoustic wave propagates from the second end of the quartz rod to the first end and thus causes a vibration to be induced in the optical fiber. The vibrations induced by the two acoustic horns produce a squeezing couple of forces on the optical fiber. The squeezing wave propagates away from the first end of the quartz rod as a series of periodic squeezing waves in the optical fiber.

The propagation velocity of the acoustic wave along the length of the fiber is dependent upon the cross-sectional dimensions of the optical fiber. Thus, the wavelength of the acoustic wave is dependent upon the cross-sectional dimensions of the fiber, as well as dependent upon the acoustic frequency. In alternative embodiments of the present invention, the optical fiber in the frequency shifter has cross-sectional dimensions that vary along the length of the fiber. The fiber thus provides a plurality of different locations, wherein the frequency of the acoustic wave having a wavelength that matches the optical beat length varies in accordance with the cross-sectional dimensions. This enables the acoustic frequency to be varied while providing a region on the fiber where substantial coupling occurs for each of the frequencies.

A cross-sectional dimension of the optical fiber can advantageously be varied in discrete steps to provide a plurality of fiber portions that define coupling regions. A first portion preferably has a larger outer diameter than a second portion so that a traveling flexural wave at a first acoustic frequency has a first acoustic velocity in the first portion corresponding to an acoustic wavelength that matches the optical beat length in the fiber and so that a traveling flexural wave at a second frequency has substantially the same acoustic wavelength in the second portion of the fiber, and thus also matches the optical beat length. An optical signal in the fiber can be selectively shifted in frequency by selecting the acoustic frequency of the traveling flexural waves.

In a preferred embodiment of the invention, the acoustic horn is preferably an elongated member with a cavity proximate to the larger end, in order to suppress propagation of resonant modes in the elongated member. The cavity can advantageously be filled with an acoustic damping material.

The present invention may be more fully understood from the following detailed description, taken in conjunction with the drawings.

### Brief Description of the Drawings

Figure 1 is a schematic representation of a birefringent fiber squeezed between two plates.

Figures 2a and 2b illustrate the effect of the squeezing forces on the axes of birefringence of the fiber of Figure 1.

Figure 3 shows a ω-k diagram wherein the frequency ω is represented as a function of the propagation constant k for the acoustic and optical waves launched in the fiber of Figure 1.

Figure 4a is a perspective illustration of a preferred embodiment of the present invention designed to generate the second order traveling flexural wave in the optical fiber, wherein the second order flexural wave is induced in the fiber by two acoustic horns which apply a lateral i.e. centripetal squeezing force to the fiber.

Figure 4b illustrates an alternative embodiment of the present invention, wherein the generator of second order flexural waves consists of two stacks of PZTs which apply a lateral or centripetal squeezing force to the fiber.

Figure 5 is an illustration of an alternative embodiment of the present invention showing an acoustic horn with a cavity for suppressing resonant modes.

Figures 6 is a pictorial representation illustrating the spatial displacement of the cross section of the fiber created by propagation of a second order flexural wave within the fiber.

Figure 7 is a pictorial representation illustrating the spatial displacements in a fiber created by propagation of a second order flexural wave along the length of the fiber.

Figures 8a illustrates an alternative embodiment of the present invention utilizing an optical fiber having a plurality of portions with different radii to provide interaction regions responsive to a plurality of acoustic frequencies.

Figure 8b illustrates an alternative embodiment of the present invention, wherein the radius of the optical fiber varies gradually.

Figure 9a is a graph of the coupling efficiency kₑ as a function of a/L_{B} for the coupling of light from one mode into the other mode through interaction with a traveling acoustic wave propagating in the fiber.

Figure 9b is a graph of the normalized frequency (synchronous frequency) of fL_{B}/Cₑₓₜ as a function of a/L_{B}.

Figures 10a, 10b, 10c and 10d are graphs of phase velocity versus fa/cₜ for flexural waves where the mode number n is equal to 2 for Poisson's ratio of 0.1, 0.2, 0.3 and 0.4, respectively.

Figure 11 is a graph of calculated phase velocity versus fa/cₜ for second order flexural waves propagating in a typical fused silica fiber.

### Description of the Preferred Embodiment of the Invention

An ideal optical fiber with perfect cylindrical symmetry has two degenerate fundamental modes which are orthogonally polarized. In actual fibers, asymmetries occur which lift the degeneracy, making what is often called "single-mode" fibers "bimodal." Geometrical distortions such as kinks and bends as well as material inhomogeneities can induce coupling between these two modes. The result is that if linearly polarized light is used to excite only one of these two modes, some of the power will be coupled to the other mode, thereby altering the polarization state of the light in the fiber. This coupling is also environmentally sensitive, so that not only is the output polarization state different from that at the input, but it may vary in time. In systems where a signal is detected by interference techniques, this variation of the polarization state can lead to undesired signal fading. Preservation of a particular polarization state is also important in interfacing fibers with integrated optics and in nonlinear fiber optics.

One way to circumvent these problems is to intentionally break the degeneracy. The resulting difference in the propagation constants of the two modes will cause the coupling between polarizations to be eliminated. Such fiber is called "birefringent" or "polarization-preserving" fiber. The asymmetry needed to strongly break the degeneracy can result from geometrical asymmetry of the core of the fiber, asymmetry of the refractive index profile, or by asymmetric stress in the fiber.

As described above, birefringent fiber supports two orthogonally polarized modes. The directions of the linear polarization of these modes are called the principal axes of the fiber. Either of these linearly polarized modes propagate through the fiber, unaltered save in phase. Any other input consists of a combination of these two modes. For example, light linearly polarized at 45° to the principal axes consists of equal amount of both modes, initially in phase. As the two modes propagate down the fiber, they accumulate a phase difference because their propagation constants are unequal. The distance required for 2π of phase difference to accumulate is called the "beat length" and is given as L_{B} = λₒ/Δnᵢ, where λₒ is the optical wavelength and Δnᵢ is the difference in refractive index for the two polarizations.

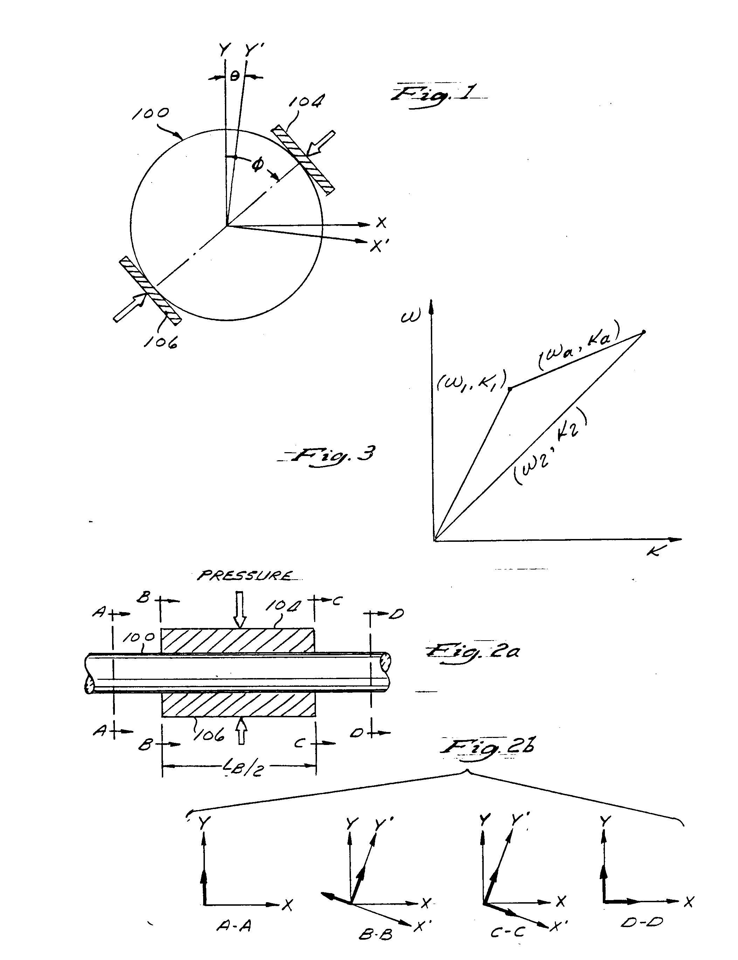

When a birefringent fiber 100 is squeezed between flat plates 104, 106 at angle φ to the axis Y, as illustrated in Figure 1, the birefringence induced by squeezing rotates the principal axes X, Y in the stressed region and perturbs the value of the birefringence. Using the conventions shown in Figure 1, it can be shown that the angle ϑ through which the principal axes X, Y rotate and the perturbed birefringence Δn′ are given by:$\text{tan 2ϑ =} \frac{{\text{Δn}}_{\text{p}} \text{sin 2φ}}{{\text{Δn}}_{\text{i}} {\text{+ Δn}}_{\text{p}} \text{cos2φ}}$
and${\text{Δn′ = (Δn}}_{\text{p}}^{\text{2}} {\text{+ Δn}}_{\text{i}}^{\text{2}} {\text{+ 2Δn}}_{\text{p}} {\text{Δn}}_{\text{i}} {\text{cos2φ)}}^{\text{½}}$
where φ is the angle relative to the axis Y at which the pressure is applied, Δnᵢ is the intrinsic birefringence of the fiber, and Δnₚ is the pressure induced birefringence. The value of Δnₚ is given by Δnₚ = an³Cf/2d, where a = 1.58 for round fibers, n is the index of refraction, C = 3.36 x 10¹²m²/N, d is the fiber diameter, and f is the force per unit length applied to the fiber. If the pressure is applied at 0° or 90°, the principal axes are not rotated and the perturbation of the birefringence is the dominant effect. If the pressure is applied at 45°, the rotation is the dominant effect and the birefringence change becomes second order.

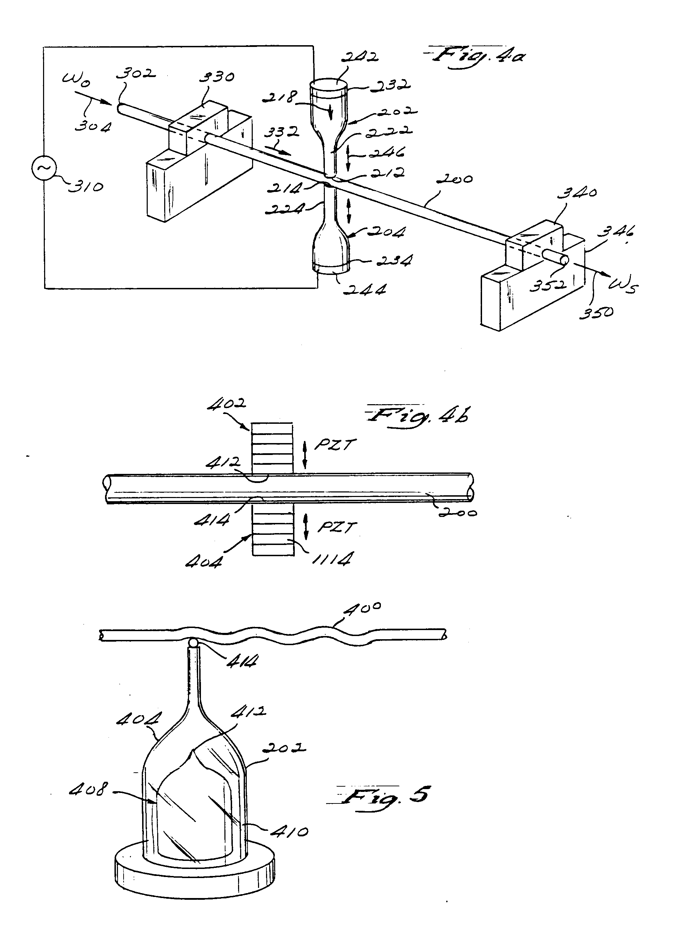

Now referring to Figure 2a, there is illustrated the coupling induced by squeezing an optical fiber 100 between two plates 104 and 106. Figure 2b is an optical diagram showing the two polarization components of the optical signal in the unstressed region and the stressed region.

In AA, the optical signal is represented as linearly polarized along the principal axis Y. Within the stressed region delimited by the referenced letters B and C, it can be represented as a superposition of components along the rotated principal axes X′, Y′ (section BB). These two components accrue a phase difference as they propagate through the stressed region since they travel at different speeds due to the birefringence. If the stressed region has a length equal to half the beat length of the optical fiber, the phase of one component relative to the other increases by π radians, as indicated in CC. Upon reaching the end of the stressed region, the light is resolved into components along the unstressed principal axes. As illustrated in DD, the result is that some of the power originally in one polarization is transferred to the other. A more complete description of polarization mode coupling is found in the W. P. Risk, et al. article entitled "Acoustic Fiber Optic Modulators," Ultrasonics Symposium, 1984.

A spatially periodic stress pattern can also induce coupling between the two polarization modes.

This power transfer will be cumulative only if the spatial period of the stress pattern equals the beat length of the fiber. The beat length is defined as L_{B} = λ/(n₁-n₂), where λ is the optical wavelength, and n₁ and n₂ are the refractive indices for the two polarization modes of the fiber. The stress pattern is most effective in causing coupling when applied at an angle of approximately 45° relative to the principal axes of birefringence of the fiber. A more detailed description of polarization mode coupling is disclosed in the R. C. Youngquist, et al. article, entitled "Birefringent Fiber Polarization Coupler," Optics Letters, Vol. 8, No. 12, pp. 656-658, December 1983.

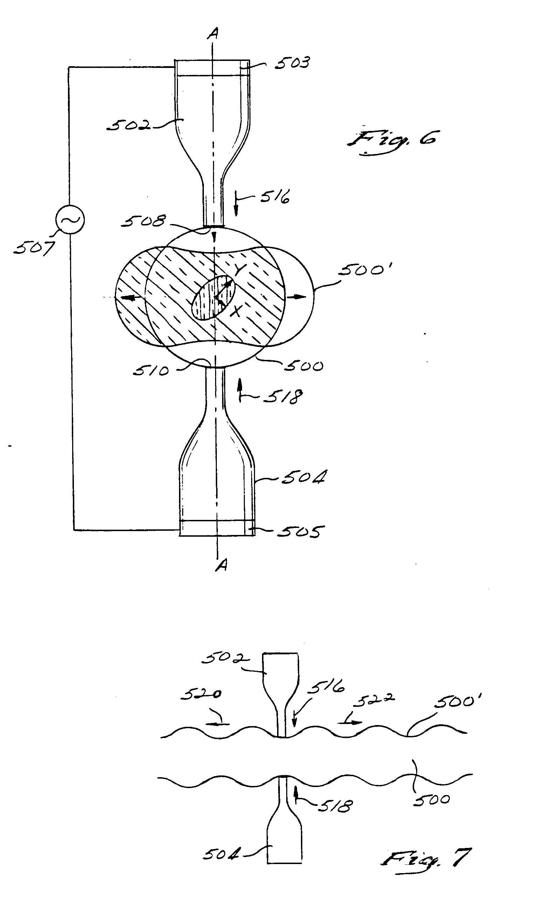

If the periodic stress pattern is produced by a traveling acoustic wave, the frequency of the light coupled from one polarization mode to the other will be shifted by the frequency of the acoustic wave. Frequency shifted coupling requires that the acoustic wave be properly phase matched to the beat pattern of the optical modes in the fiber. Such phase matching occurs when the acoustic wavelength measured along the length of the fiber is equal to the beat length L_{B} for the polarization modes of the fiber. Stated differently, the phase matching condition is satisfied when k₂ = k₁ + kₐ, where k₁ is the optical propagation constant for light propagating in the faster mode of the fiber (lower index of refraction), k₂ is the propagation constant of the slower mode of the fiber (higher index of refraction), and kₐ is the propagation constant of the acoustic wave propagating in the fiber. If the acoustic wave is traveling in the same direction as the light, light launched into the fast mode of the fiber at frequency ω will be coupled to the slow mode and upshifted in frequency to ω + ωₐ (upper sideband). Light launched into the slow mode at frequency ω will be coupled to the fast mode and downshifted in frequency to ω - ωₐ (lower sideband). If the direction of the acoustic wave is reversed, the upshifted wave appears in the fast mode and the downshifted wave in the slow mode. These relationships can be readily visualized using the ω-k diagram shown in Figure 3. A more detailed description of this frequency shifting process may be found in copending European Patent Application EP-85300904.1, published August 28, 1985 under Publication No. 0153124 and entitled "Acousto-Optic Frequency Shifter." This reference has been assigned to the assignee of the present application and is incorporated herein by reference. The devices reported in this copending application demonstrated this principle utilizing surface acoustic waves and bulk acoustic waves propagating in a medium external to the fiber but in acoustic contact with the fiber.

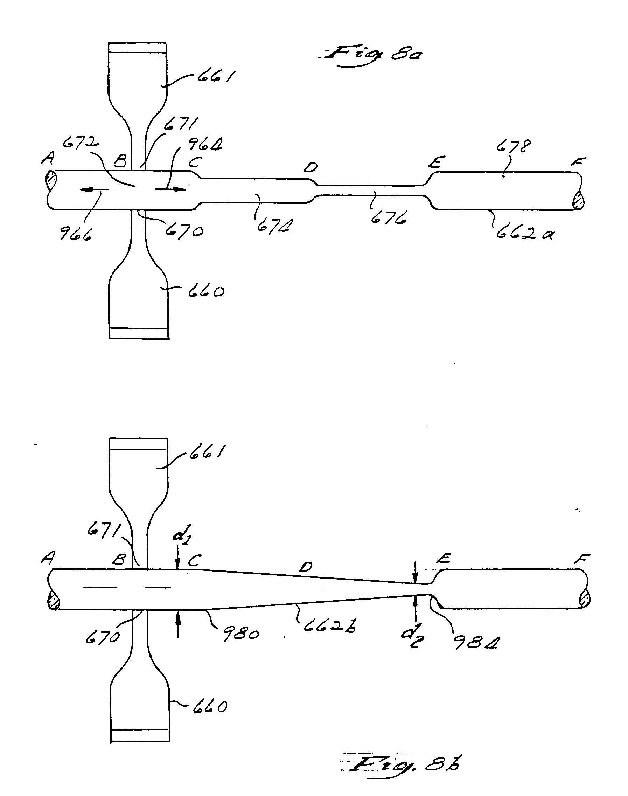

Two preferred embodiments of the present invention, illustrated in Figures 4a and 4b, utilize second order flexural acoustic waves to cause frequency shifting in a birefringent fiber. Generally, the second order flexural wave propagates in a manner which exerts a traveling squeezing force on the fiber and causes the light to be coupled from one polarization mode to another. In both embodiments, the acoustic wave is confined to propagate in the fiber. In one embodiment, shown in Figure 4a, the second order flexural wave is generated by two acoustic horns, 202 and 204, attached to the birefringent fiber 200 at locations 212 and 214, respectively. The birefringent fiber can optionally be an elliptical core fiber.

The acoustic horns 202 and 204 are particularly adapted to generate the periodic stress pattern described above. The acoustic horns 202, 204 in the preferred embodiment are identical and diametrically-opposed and each comprises a rod of fused quartz having a substantially circular cross section throughout its length. The horn 202 will be hereinbelow described in more detail, but it should be noted that the horn 204 has substantially the same features and properties as the horn 202.

A first end 222 of the horn 202 has a diameter substantially equal to the diameter of the fiber 200. For example, in one embodiment of the present invention, the diameter of the fiber 200 and of the first end 222 of the horn 202 is approximately equal to 100µm. Preferably, the horn 202 and the optical fiber 200 are fused together at the location 212 to provide good acoustic contact between the fiber 200 and the first end 222 of the horn 202.

The horn 202 has a second end 232 which has a diameter which is substantially larger than the diameter of the first end 222. For example, the second end 232 can have a diameter of approximately two millimeters. In the preferred embodiment, the horn 202 is formed from a rod of solid fused quartz having an initial diameter of two millimeters or larger and by drawing the quartz rod into a form which gradually tapers from the second end 232 to the smaller first end 222.

A piezoelectric material transducer 242 is bonded to the second end 232 of the horn 202 in a manner well known in the art. When an electrical signal, represented schematically as a signal generator 310, is applied to the PZT 242, the PZT 242 expands and contracts in the directions indicated by the double-headed arrow 246 and generates a series of acoustic wavefronts which propagate through the horn 202 from the second end 232 to the first end 212, as indicated by an arrow 218. At the first end 212, the acoustic energy in the horn 202 is coupled directly to the optical fiber 200 at the location 212 to cause up and down movement of the fiber 200. In the particular embodiment represented in Figure 4a, the two horns are located on opposite sides of the fiber 200 at locations 202 and 214, respectively. The vibrations in the fiber 200, respectively induced by the transducers 242 and 244, generate a second order traveling flexural wave as described above, propagating away from the locations 212, 214.

The solid quartz of the horn 202 acts as an acoustic funnel which concentrates the acoustic energy developed at the second end 232. Thus, in the example presented, when the second end 232 has a diameter of approximately 20 times the diameter of the first end 222, the acoustic energy per unit area applied to the first end 232 is approximately 400 times the acoustic energy per unit area applied to the second end 232. Furthermore, substantially all of the acoustic energy applied to the second end 232 is conducted to the first end 222 and is used to induce the second order traveling flexural wave in the fiber 200.

In both embodiments illustrated in Figures 4a and 4b, a signal generator 310 is connected to the PZTs 242, 244. The embodiment of Figure 4a further includes a first damper 330, proximate to the locations 212, 214, to limit the travel of the second order flexural wave in the fiber 200 to one direction, indicated by an arrow 332, away from the damper 330. The embodiment of Figure 4a also preferably includes a second damper 340 to suppress propagation of the second order flexural wave beyond a selected length of the fiber. In the embodiment illustrated in Figure 4b, the two horns 202 and 204 are replaced by two stacks of PZTs 402, 404 attached to the fiber at locations 412 and 413, respectively. The two stacks of transducers generate the second order flexural acoustic wave in a similar manner as described hereabove.

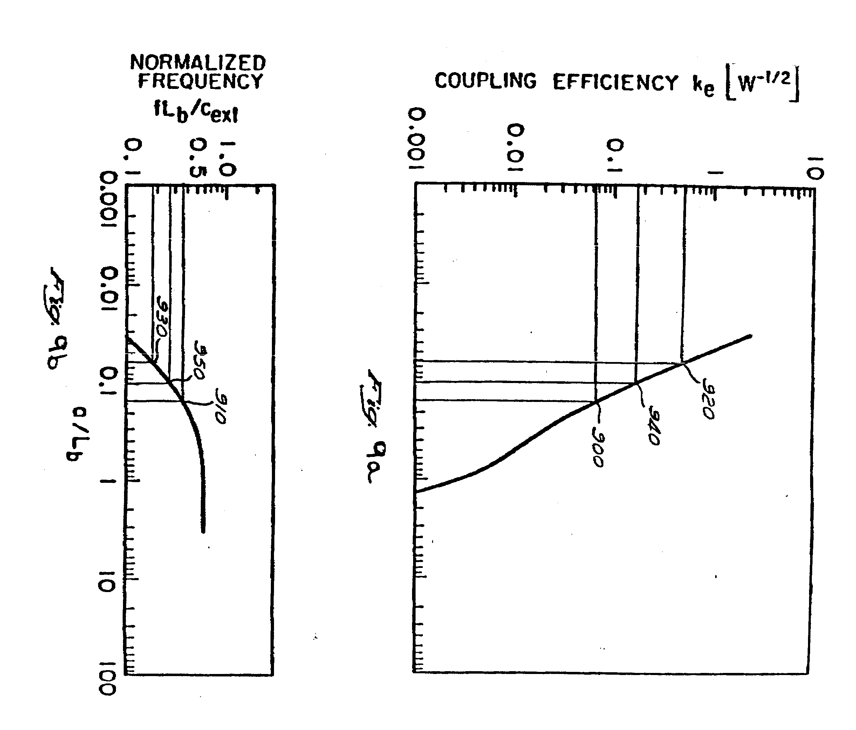

The acoustic horn 202, described above, performs well; however, in addition to the desired primary longitudinal mode, resonant modes were also observed at the small end 222 of the horn 202. These resonant modes can be suppressed by drawing the horn from a silica glass tube such that the horn is hollow in the center from the large diameter base to the neck at the end of the transition region. Figure 5 illustrates a hollow acoustic horn 404 having a hollow region 408 in a base 410. The hollow region 408 of the horn 404 terminates in a neck portion 412. The neck portion terminates on a small end 414. The small end 414 is connected to the optical fiber 400 as discussed above. The hollow region 408 suppresses the resonant modes in the horn 404. Suppression of the resonant mode can be further enhanced by filling the hollow region 408 with acoustic damping material.

The horns of Figures 4a and 4b have successfully launched flexural acoustic waves with amplitudes of tens of nanometers onto the optical fiber 200.

In both of these embodiments, light is coupled between polarization modes of the fiber and shifted in frequency by a traveling periodic perturbation of the fiber birefringence as described in the above-cited copending Patent Application Serial No. 581,176. However, the traveling periodic stress pattern in the present invention is provided by an acoustic wave which propagates in the fiber. Preferably, the acoustic wave comprises the lowest mode of the n = 2 group of flexural acoustic waves. This mode as a spatial displacement variation similar to the spatial displacement generated in a fiber by a traveling periodic lateral i.e. centripetal squeezing force. The squeezing spatial displacement of this wave mode is an inherent characteristic of second order flexural waves propagating in rod-shaped media.

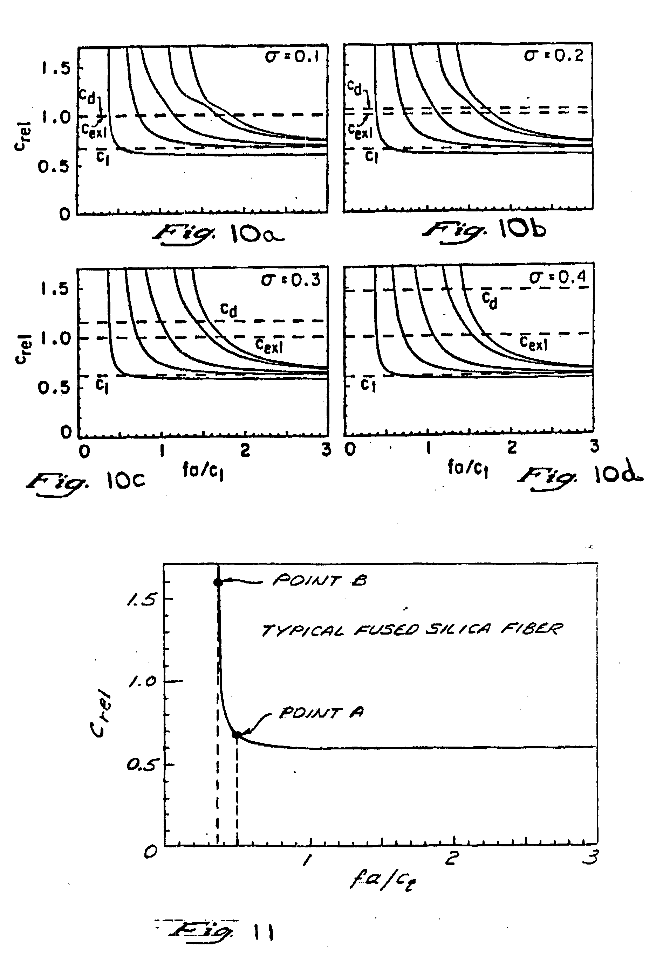

Figure 6, which is a cross-sectional projection along lines A-A in Figure 4a, illustrates in more detail how the method of generating second order flexural waves in a fiber is implemented. In this embodiment, two acoustic horns 502, 504 are located on opposite sides of the fiber 500 at locations 508 and 510, respectively. PZTs 503, 505 cause longitudinal acoustic waves to. be generated at the ends 508, 510 of the acoustic horns 502, 504. The longitudinal waves produced at the ends of the acoustic horns apply a lateral force along the diameter of the fiber in the direction of the arrows 516, 518, in other words a centripetal couple of forces 516, 518. As illustrated, these forces 516, 518 are applied at an angle with respect to the axes of birefringence (X, Y) of the fiber 500. Preferably, the forces represented by arrows 516, 518 are of equal amplitude but opposite direction and at an angle of substantially 45° with respect to axes of birefringence. These conditions an be achieved by driving the PZTs 503, 505 attached to the acoustic horns with the same signal generator 507. This ensures that the forces 516, 518 are in phase and of approximately equal amplitude. Application of the centripetal forces along the direction of the arrows 516, 518 causes the cross-sectional dimensions of the fiber 500 to be distorted as represented by the fiber profile 500′.

Figure 7 illustrates a side view of the fiber 500, showing the propagation of the distorted profile 500′ generated by the acoustic horns and propagated within the fiber 500 as second order flexural waves. The forces 516, 518 applied to the fiber spatially distort the fiber and generate the flexural acoustic waves which propagate within the fiber 500 in opposite directions as represented by arrows 520 and 522.

The phase matching condition for coupling between modes is satisfied when the acoustic wavelength, as measured along the direction of the fiber equals the beat length, L_{B}, of the fiber. In a typical single-mode birefringent fiber, the beat length L_{B} is approximately 2 mm, therefore, phase matching will occur when the wavelength of the second order flexural acoustic wave is also approximately 2 mm.

Two alternative embodiments of the present invention are illustrated in Figures 8a and 8b. The frequency shifters of Figures 8a and 8b include two acoustic horns 660, 661, each having an end 670, 671 attached to an optical fiber 662a (Figure 8a) or 662b (Figure 8b). Unlike the previously described optical fibers of Figures 1 to 7, the optical fibers 662a and 662b of Figures 8a and 8b do not have uniform outer cladding diameters. Rather, the optical fiber 662a has a plurality of sections having differing outer cladding diameters. For example, the optical fiber 662a is shown as having a first portion 672 having a first outer diameter, a second portion 674 having a second outer diameter, and a third portion 676 having a third outer diameter. In an exemplary embodiment, the first outer diameter is 42.5µm, the second outer diameter is 26.5µm and the third outer diameter is 16µm. The fiber 662b of Figure 8b has a gradual taper in the outer diameter cladding of the fiber from a relatively large outer diameter (e.g., 42.5µm) to a relatively small outer diameter (e.g., 16µm). The frequency shifters of Figures 8a and 8b provide means for selectively shifting the frequency of an optical signal propagating in the fiber 662a and 662b by one of a plurality of acoustic frequencies while maintaining optimum or near-optimum acousto-optic coupling efficiency in the fibers 662a and 662b.

In these embodiments, the dampers 330 and 340 shown in Figure 4a are no longer needed. The acoustic horns 660, 661 couple longitudinal mode acoustic waves to the fiber 662a at the general location indicated by the letter B. A pair of arrows 964, 966 pointing in opposite directions within the fiber portion 672 indicate that flexural acoustic waves are excited in the fiber 662a by the acoustic horn 660 which propagate in both directions along the fiber 662a. The section of optical fiber 662a shown in Figure 8a is comprised of four portions. The first portion 672 between a location A and a location C is the full radius of the fiber a₀. The second portion 674, between a location C and a location D, has been etched to a fiber radius of a₁ which is less than a₀. The portion 676 between a location D and a location E has been further etched to fiber radius a₂ which is less than a₁. A fourth portion 678 between a location E and a location F has not been etched and has original fiber radius a₀.

A complete description of the general solutions of the acoustic wave equations in solid, circular rods consisting of isotropic, homogeneous material, as well as of the relations between the rod radius and the acoustic amplitude for a given power can be found in the copending European Application No. 87300269.5, hereabove mentioned.

In a nutshell, the acousto-optic coupling efficiency is defined as kₑ = C₁ uₜ (ac√P), where C₁ is a constant, uₜ is the transverse amplitude, a_{c} is the radius of the optical fiber core, P is the power flowing through the fiber cross section. P is further given by:${\text{P = c}}_{\text{g}} {\text{∫}}_{\text{s}} \text{EdS}$
where S is the fiber cross section, c_{g} represents the group velocity of the traveling wave and E is the time averaged energy density of the traveling wave.

Figure 9a illustrates the coupling efficiency, kₑ, for the coupling of light traveling in one mode into the other mode through interaction with a traveling second order flexural acoustic wave propagating in a multimode fiber. Although the following data are related to multimode fiber propagation, the derived results are essentially valid for single-mode fiber propagation. The following Figures 9a and 9b are, therefore, only used for illustrative purposes.

For constant core properties, i.e., a constant beat length L_{B}, Figure 9a shows that the coupling efficiency for a given input power can be increased considerably by reducing the outer radius, aₒ, of the fiber. For low values of aₒ/L_{B}, kₑ is proportional to (aₒ/L_{B})^{-2.5}.

Reducing the outer radius of the fiber creates a decrease in the phase velocity of the flexural acoustic wave propagating in the fiber. If the frequency of the acoustic signal is fixed, this decrease in phase velocity creates a corresponding decrease in the acoustic wavelength within portions of the fiber having relatively smaller radii.

The beat length of the fiber is determined by the properties of the central core. Therefore, reducing the radius of the fiber by removing only the outer cladding portion does not alter the beat length of the fiber.

Since substantial cumulative coupling of the optical signal between the two propagation modes of the fiber only occurs when the acoustic wavelength is substantially equal to the beat length of the fiber, the acoustic frequency must be decreased accordingly in order to maintain an acoustic wavelength which is substantially equal to this beat length. This relationship between the frequency of the acoustic wave, f_{A}, defined as the synchronous frequency, normalized to the beat length (L_{b}) and the extensional velocity (cₑₓₜ = (Y/ξ)^{1/2}, where Y is Young's modulus and ξ is the density of the fiber) is illustrated in Figure 9b. The synchronous frequency f_{A} is linearly proportional to the radius for small values of the normalized radius a/L_{b}.

It is seen that, at the location labeled 900 on Figure 9a for a fiber radius a = 42.5µm, the coupling efficiency is approximately 0.071 W^{-1/2} and that, at location 910 on Figure 9b, an acoustic frequency f_{A} of approximately 8 MHz produces an acoustic wave in the fiber with a wavelength approximately equal to the fiber beat length of 265µm.

Assuming the fiber outer radius is etched or otherwise reduced to approximately 16µm, it is seen from Figure 9a that, at the location marked 920, the coupling efficiency increases to approximately 0.5W^{-1/2}, about seven times greater than the coupling efficiency of the unetched fiber with a radius of 42.5µm. The curve of Figure 9b shows that the acoustic frequency which produces an acoustic wave with a wavelength equal to the fiber beat length is approximately 4.0 MHZ, illustrated at the location 930.

Similarly, for a fiber radius of approximately 26.5µm, Figure 9a shows a coupling efficiency of approximately 0.17W^{-1/2} at a location 940, and Figure 9b shows that an acoustic frequency of approximately 6.0 MHz will produce an acoustic wavelength equal to the beat length of the fiber, 265µm at the location 950.

Thus, it is clearly illustrated in Figures 9a and 9b that the coupling efficiency and synchronous frequency vary with the radius of the fiber. The present invention utilizes these characteristics of fibers to produce a broadband fiber optic frequency shifter. The invention further uses these characteristics to couple the acoustic wave to the fiber without using external dampers to confine the acoustic wave to the coupling region of the fiber.

Calculations have shown that by reducing the fiber radius and keeping the core radius constant, the coupling length can be reduced substantially for a given acoustic power. This means that the bandwidth of the acousto-optic coupling interaction can be increased by reducing the fiber radius. Alternatively, acoustic power can be reduced if the coupling length is kept constant. As the fiber radius is reduced, the operating frequency is reduced to match the beat length.

Referring to Figure 9a, the coupling efficiency in the first portion 672 in Figure 8a is less than the coupling efficiency in the second portion 674 which is, in turn, less than the coupling efficiency in the third portion 676. The fourth portion 678 with radius a₀ will have the same coupling efficiency as the first portion 672 since these two portions are the same radius.

Due to the low coupling efficiency in the first portion 672, the flexural acoustic wave propagating in the direction of the arrow 966 will cause virtually no acousto-optic coupling between modes when the excitation takes place at the location B. Likewise, the flexural acoustic wave propagating in the direction of the arrow 964 will cause virtually no coupling while the flexural acoustic wave is propagating within the first portion 672.

When the flexural acoustic wave propagating in the direction 964 reaches the second portion 674 and the third portion 676, the acousto-optic coupling efficiency increases substantially as demonstrated in the European Patent Application Serial No. 87300269.5, hereabove mentioned. The coupling efficiency in the fourth portion 678 will be small compared to that in portions 674 and 676 resulting again in virtually no coupling. The advantage of this configuration is that acoustic wave dampers are no longer needed along the fiber at the ends of the section CDE because no substantial acousto-optic interaction occurs outside the region of the second portion 674 and the third portion 676.

A second characteristic of the configuration shown in Figure 8a is that the acoustic frequency required to produce an acoustic wave whose wavelength matches the fiber beat length in the second portion 674 with fiber radius a₁, will be different than the frequency required for matching the beat length in the third portion 676. This enables the same apparatus to be used for frequency shifting the light by two or more frequencies.

The radius of the fiber in the second portion 674 may be optimized for one frequency, and its length may be selected to achieve 100% coupling at that frequency. To increase the bandwidth of the coupling interaction, the third portion 676 may be optimized in radius and length for a different frequency. Similarly, adding more regions of fiber with different radii and lengths increases the bandwidth of the frequency shifter accordingly.

A smooth variation of the fiber radius over the total interaction region is illustrated in Figure 8b. In Figure 8b, the diameter of the fiber 662b gradually varies from a diameter d₁ at a first portion 980 where the fiber 662b is coupled to the acoustic horns 660, 661 to a second diameter d₂ at a location 984, which is smaller than the first diameter d₁. As stated earlier, precise matching of the beat length and the acoustic wavelength is not necessary as long as complete coupling is accomplished within a few beat lengths of the fiber. This minimizes the phase mismatch error created by the mismatch in acoustic wavelength with the fiber beat length in the coupling region. Therefore, the taper shown in Figure 8b can be gradual enough so that, within a length of fiber wherein 100% coupling occurs, the acoustic wavelength does not vary appreciably from the fiber beat length. The configuration of Figure 8b will allow continuous tuning of the frequency shift between a frequency f₁ corresponding to the fiber diameter d₁ and a frequency f₂ corresponding to the fiber diameter d₂.

The optimum angle of the taper, or rate of change of fiber radius as a function of length along the fiber longitudinal axis, may be determined by an empirical process. The process would include measuring the coupling efficiency for a number of different taper angles for a fixed acoustic frequency and selecting the angle which produces the maximum coupling efficiency.

The magnitude of the acousto-optic frequency shift generated by acoustic waves interacting with a fiber is equal to the frequency of the acoustic wave. The frequency of the acoustic wave is given by f = c/λ, where λ is the wavelength and c is the phase velocity of the acoustic wave within the fiber. Generally, frequency shifters are designed to generate a specific frequency shift. The acoustic wavelength is required by the phase matching condition to be equal the beat length of the fiber. Selection of a specific acoustic frequency is,therefore, dependent upon the control and selection of the phase velocity in accordance with this relationship. Figures 10a-10d illustrate the dependence of the normalized phase velocity of the acoustic wave cᵣₑₗ as a function of fa/cₜ for the five lowest modes of the second order group of flexural waves, wherein cᵣₑₗ is the normalized phase velocity, defined as c/cₑₓₜ, a is the fiber radius, f is the acoustic frequency and cₜ and cₑₓₜ are constants characteristic of the propagation medium. Figures 10a-10d demonstrate that for n = 2 flexural modes, all modes are cut off at low fa/cₜ values and that for large fa/cₜ, the lowest mode approaches the surface wave velocity while the other modes approach the transverse wave velocity cₜ. Figures 10a-10d have been considered for Poisson's ratio of 0.1, 0.2, 0.3 and 0.4. These lengths are typical of flexural modes with n larger than 1.

The general solutions of the acoustic wave equations in solid, circular rods consisting of isotropic, homogeneous material are, as mentioned hereabove, set forth in detail in the referenced copending European Patent Application No. 87300269.5.

Figure 11 is a curve similar to the curves of Figures 10a-10d, illustrating the lowest propagation mode of a second order flexural wave propagating in a typical fused silica fiber. Using this curve, typical fiber diameters corresponding to specific acoustic frequencies of an acoustic wave having a wavelength of 2 mm can be calculated. The following table summarizes the fiber diameters meeting these criteria for three representative frequencies calculated for two different values of the parameter fa/cₜ:

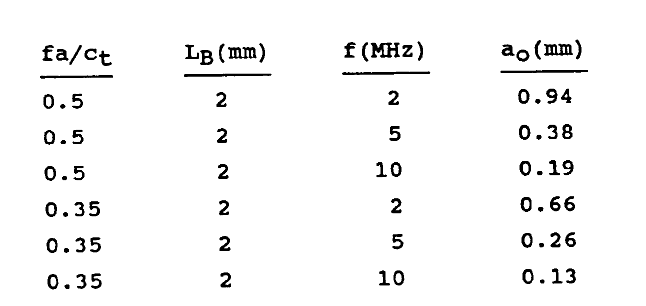

The locations labeled A and B on the curve correspond to values of fa/cₜ, approximately to 0.5 and 0.35, respectively. The numbers in this table illustrate that the frequency shifter of the present invention, utilizing a single-mode birefringent fiber with a beat length of 2 mm, will shift the frequency of light coupled between polarization modes by 2 MHz, 5 MHz and 10 MHz when the radius of the fiber is 0.94 mm, 0.38 mm and 0.19 mm, respectively, when fa/cₜ is selected to be 0.5. The same frequency shifts, i.e., 2 MHz, 5 MHz and 10 MHz, may also be produced with fiber having radii of 0.66 mm, 0.26 mm and 0.13 mm, respectively, when the value of fa/cₜ is chosen to be 0.35.

The bandwidth of the subject frequency shifter can be defined as the range of frequencies within which frequency shifting occurs. Outside of this range of frequencies, substantially no frequency shifted coupling takes place. The bandwidth of the subject invention, operating at a specific location along the curve in Figure 11, can be shown to be proportional to the slope of the curve at that specific location. Since the slope at point A is readily seen to be substantially smaller than the slope at point B, it follows that the bandwidth of the device using fiber radii and frequencies corresponding to point A will be substantially larger than the bandwidth for the similar device using fiber radii and frequencies corresponding to point B. For example, the bandwidth for a 10 MHz frequency shifter having a fiber radius of 0.19 mm (point A) will be substantially larger than the bandwidth for a 10 MHz frequency shifter having a fiber radius of 0.13 mm (point B). Bandwidths intermediate these two values occur at locations along the curve corresponding to fa/cₜ values intermediate those of point A and point B. Thus, it is seen that a desired bandwidth at a specific frequency can be selected by appropriate selection of the fiber radius.

The coupling efficiency of the present invention is a function of the amount of acoustic energy required to cause substantially all of the optical energy propagating in one polarization mode to be coupled to the other polarization mode. A low efficiency device requires more acoustic power input to effectuate the same amount of optical coupling than would a higher efficiency device.

Coupling between polarization modes occurs as a result of perturbing the birefringence of the fiber. Since the birefringence of the fiber is primarily determined by the characteristics of the fiber core, the coupling efficiency is closely related to the amount of acoustic energy concentrated in the region of the core and available for perturbation of the core.

At low frequencies, the wave energy of flexural waves is distributed over the cross section of the fiber. Since the core is located at or near the center of the fiber, it is primarily affected by the portion of wave energy propagating at or near the core of the fiber. As the frequency of the flexural wave increases, the wave energy becomes increasingly concentrated near the surface of the fiber. For very high frequencies, the flexural wave propagates with nearly all of its energy concentrated within a few wavelengths of the fiber surface. Obviously, these surface displacements will not place much stress on the core of the fiber and thus will have a minimal effect on coupling generated by perturbation of the fiber core. Thus, the efficiency of the coupling is seen to be dependent upon the frequency of the flexural wave, lower frequency waves being more effective in perturbing the fiber core than are higher frequency waves.

Relative coupling efficiency is also dependent on the relative diameters of the fibers. The diameter of a fiber does not necessarily affect its beat length, since the beat length is a characteristic determined primarily by the core. Therefore, the difference between two fibers having the same beat length but different outer diameters is primarily in the thickness of the cladding surrounding the core. For maximum perturbation of the core caused by squeezing the fiber, it is preferable to use the smaller diameter fiber since the acoustic squeezing energy per unit area of fiber will be greater in smaller fiber for the same acoustic input energy simply by virtue of the geometrics of the fiber. For example, the energy per unit area in a fiber having a radius of 0.94 mm is about twice as large as the energy density in a fiber with a radius of 0.66 mm. Assuming the same input energy, the core of the smaller fiber will be perturbed to a greater extent than will the core of the larger fiber, and thus the smaller fiber will provide a higher coupling efficiency.

While preferred embodiments of this invention have been disclosed herein, those skilled in the art will appreciate that changes and modifications may be made therein without departing from the scope of this invention as defined in the appended claims.

## Claims

1. An apparatus for coupling optical energy between optical propagation modes in an optical fiber, comprising:-
an optical fiber (200, 400, 500, 662a, 662b) having a first optical propagation mode and a second optical propagation mode for optical signals propagating therein; and
a generator (202, 204, 402, 404, 502, 504, 660, 661) for producing a travelling flexural wave in the optical fiber, the energy of said travelling flexural wave being confined to said optical fiber, said travelling flexural wave acting on said fiber, the wavelength of said flexural wave being substantially equal to the beat length of said fiber (200) for said optical signals;
characterised in that the optical fiber is a birefringent single mode fiber having first and second polarisation modes, the flexural wave generator is a second order flexural wave generator for producing a second order travelling flexural wave in the fiber which distorts said fiber so as to apply a periodic lateral squeezing couple of forces to said fiber, and the generator is arranged to produce a wavelength for said second order flexural wave which causes light to be coupled from one of said modes to the other of said modes and shifted in frequency.

2. The apparatus as defined in Claim 1, characterised in that said generator (202) includes a signal generator (310,507) for varying the frequency of said flexural wave.

3. The apparatus as defined in any one of Claims 1 to 2, characterised in that the optical energy travelling in said first propagation mode has a first optical frequency and first phase propagation velocity, and the optical energy coupled to said second propagation mode has a second optical frequency and second propagation velocity, the second optical frequency being substantially equal to either the sum or difference of the first optical frequency and the frequency of said flexural wave.

4. The apparatus as defined in Claim 3, characterised in that the second optical frequency is equal to the first optical frequency plus the frequency of said flexural wave when the optical energy propagates in the same direction as the flexural wave and the first phase propagation velocity is greater than the second phase propagation velocity, and in that the second optical frequency is equal to the first optical frequency minus the frequency of said flexural wave when the optical energy propagates in the same direction as the flexural wave and the first phase velocity is less than the second phase velocity.

5. The apparatus as defined in any one of Claims 1 to 4, characterised in that the length of the region over which substantial coupling occurs is small compared to the length of said fiber (200), the location of said region varying along said fiber (200) as the frequency of said flexural wave is varied.

6. The apparatus as defined in any one of Claims 1 to 5, characterised in that said generator of said second order flexural wave comprises at least a first (202, 502, 660) and a second (204, 504, 661) acoustic horn, positioned on said fiber at substantially diametrically opposed locations.

7. The apparatus as defined in Claim 6, characterised in that each of said acoustic horns (202, 204) comprises an elongated member having a first end (222, 224) mechanically coupled to said optical fiber and having a second end (232, 234) disposed away from said first end (222, 224), said second ends (232, 234) of said first and second acoustic horns (202, 206) having, respectively disposed thereon, a first and a second piezoelectric transducer (PZT) (242, 244), said transducers (242, 244) connected to said generator (310, 507) responsive to an electrical signal applied thereto for generating an acoustic wave which propagates from said second end of said member to said first end of said member to thereby induce said flexural wave in said optical fiber (200).

8. The apparatus as defined in Claim 7, characterised in that said second end (232, 234) of said member in each of said transducers is larger than said first end (222, 224) of said member so that the acoustic energy per unit area applied to said optical fiber is greater than the acoustic energy per unit area excited in said second end of said member by said transducer.

9. The apparatus as defined in any one of Claims 7 to 8, characterised in that each of said transducers (242, 244) excites longitudinal mode acoustic waves in said member, which produce lateral forces on the periphery of said fiber (200), said lateral forces being in phase and of approximately equal amplitude, thereby generating said squeezing couple of forces.

10. The apparatus as defined in Claim 9, characterised in that each of said transducers excites surface acoustic waves at said second end (232, 234), said member converting the energy of said surface waves to provide said longitudinal mode acoustic waves at said first end (222, 224) of said member.

11. The apparatus as defined in any one of Claims 7 to 10, characterised in that said member comprises a cylinder which is hollow at said second end (242, 244) and is solid at said first end (222, 224), the transition between said hollow end and said solid end being a smooth taper, and in that said cylinder in each of said acoustic horns (202, 204) is filled with acoustic damping material for suppressing resonant modes in each of said horns (202, 204).

12. The apparatus as defined in any of Claims 1 to 11, characterised in that the orientation of said squeezing couple of forces is at an angle of substantially 45° with respect to the axes of birefringence of said fiber.

13. The apparatus as defined in any one of Claims 1 to 12, characterised in that said generator of said flexural wave comprises at least a first set (402) and a second set (404) of PZTs, said first and said second sets being diametrically positioned against said fiber, said PZTs being stacked on one another in each of said sets.

14. The apparatus as defined in any one of Claims 1 to 13, characterised in that the propagation velocity of said flexural wave is dependent upon the cross-sectional dimensions of said fiber, and wherein said fiber is tapered to cause said propagation velocity to vary along the length of said fiber.

15. The apparatus as defined in any one of Claims 1 to 14, characterised in that the efficiency of the coupling between said two modes is dependent upon the cross-sectional dimensions of said fiber, said efficiency being higher for smaller diameters of said fiber.

16. The apparatus as defined in any one of Claims 1 to 15, characterised in that said travelling flexural wave comprises the lowest mode of the group of second order flexural acoustic waves.

17. A method of coupling the optical energy of an optical signal travelling in the first propagation mode at a first frequency and at a first phase propagation velocity to a second propagation mode at a second frequency and at a second phase propagation velocity, comprising the steps of:
inputting said optical signal into a first end of an optical fiber (200); and
propagating a travelling flexural wave along a length of said optical fiber (200), said flexural wave acting on said fiber, the wavelength of said flexural wave being selected to be substantially equal to the beat length of said fiber for said optical signal;
characterised in that the optical fiber is a birefringent single mode fiber having first and second polarisation modes, the flexural wave is a second order travelling flexural wave, and said travelling couple of forces distorts the fiber so as to apply a travelling periodic lateral squeezing couple of forces to said fiber and causes a portion of the optical energy in said first polarisation mode to be coupled to said second
polarisation mode and shifted in frequency by a frequency magnitude equal to said freqency of said flexural wave.

18. A method of coupling said optical energy between optical propagation modes in optical fiber as defined in Claim 17, further characterised by the step of applying said periodic squeezing force to said fiber at an angle with respect to axes of birefringence of said fiber, said angle preferably being about 45°.

## Patentansprüche

1. Vorrichtung zum Koppeln optischer Energie zwischen optischen Ausbreitungsmoden in einer optischen Faser, mit
- einer optischen Faser (200, 400, 500, 662a, 662b), die eine erste optische Ausbreitungsmode und eine zweite optische Ausbreitungsmode für sich darin ausbreitende optische Signale hat, und
- einem Generator (202, 204, 402, 404, 502, 504, 660, 661) zum Erzeugen einer wandernden Biegewelle in der optischen Faser, wobei die Energie der wandernden Biegewelle auf die optische Faser begrenzt ist, wobei die wandernde Biegewelle auf die Faser einwirkt, wobei die Wellenlänge der Biegewelle im wesentlichen gleich der Schwebungslänge der Faser (200) für die optischen Signale ist,
dadurch **gekennzeichnet**, daß die optische Faser eine doppelbrechende Einzelmodenfaser ist, die erste und zweite Polarisationsmoden hat, daß der Biegewellengenerator ein Generator für Biegewellen der zweiten Ordnung zum Erzeugen einer wandernden Biegewelle zweiter Ordnung in der Faser ist, die die Faser so verformt, daß ein periodisches seitliches Paar von Quetschkräften auf die Faser ausgeübt wird, und daß der Generator angeordnet ist, um eine Wellenlänge für die Biegewelle der zweiten Ordnung zu erzeugen, die Licht veranlaßt, von einer der Moden in die andere der Moden gekoppelt und in der Frequenz verschoben zu werden.

2. Vorrichtung nach Anspruch 1, dadurch **gekennzeichnet**, daß der Generator (202) einen Signalgenerator (310, 507) zum Verändern der Frequenz der Biegewelle aufweist.

3. Vorrichtung nach einem der Ansprüche 1 bis 2, dadurch **gekennzeichnet**, daß die in der ersten Ausbreitungsmode wandernde optische Energie eine erste optische Frequenz und eine erste Phasenausbreitungsgeschwindigkeit hat, und daß die zu der zweiten Ausbreitungsmode gekoppelte optische Energie eine zweite optische Frequenz und eine zweite Ausbreitungsgeschwindigkeit hat, wobei die zweite optische Frequenz im wesentlichen gleich entweder der Summe oder der Differenz der ersten optischen Frequenz und der Frequenz der Biegewelle ist.

4. Vorrichtung nach Anspruch 3, dadurch **gekennzeichnet**, daß die zweite optische Frequenz gleich der ersten optischen Frequenz plus der Frequenz der Biegewelle ist, wenn die optische Energie sich in der gleichen Richtung ausbreitet wie die Biegewelle und die erste Phasenausbreitungsgesehwindigkeit größer ist als die zweite Phasenausbreitungsgeschwindigkeit, und daß die zweite optische Frequenz gleich der ersten optischen Frequenz minus der Frequenz der Biegewelle ist, wenn die optische Energie sich in der gleichen Richtung ausbreitet wie die Biegewelle und die erste Phasengeschwindigkeit kleiner ist als die zweite Phasengeschwindigkeit.

5. Vorrichtung nach einem der Ansprüche 1 bis 4, dadurch **gekennzeichnet**, daß die Länge des Bereichs, über den eine wesentliche Kopplung auftritt, klein ist im Vergleich zu der Länge der Faser (200), wobei die Stelle des Bereichs längs der Faser (200) variiert, wenn die Frequenz der Biegewelle variiert wird.

6. Vorrichtung nach einem der Ansprüche 1 bis 5, dadurch **gekennzeichnet**, daß der Generator der Biegewelle der zweiten Ordnung wenigstens ein erstes (202, 502, 660) und ein zweites (204, 504, 661) akustisches Horn aufweist, die an der Faser an im wesentlichen diametral gegenüberliegenden Stellen angeordnet sind.

7. Vorrichtung nach Anspruch 6, dadurch **gekennzeichnet**, daß jedes der akustischen Hörner (202, 204) ein längliches Glied aufweist, das ein erstes Ende (222, 224) hat, das mechanisch mit der optischen Faser gekoppelt ist, und ein zweites Ende (232, 234) hat, das von dem ersten Ende (222, 224) entfernt angeordnet ist, wobei die zweiten Enden (232, 234) der ersten und zweiten akustischen Hörner (202, 204) jeweils darauf angeordnet einen ersten und einen zweiten piezoelektrischen Wandler PZT (242, 244) haben, wobei die Wandler (242, 244) mit dem Generator (310, 507) verbunden sind, der auf ein daran angelegtes elektrisches Signal anspricht, um eine akustische Welle zu erzeugen, die von dem zweiten Ende des Gliedes zu dem ersten Ende des Gliedes wandert, um dadurch die Biegewelle in der optischen Faser (200) zu induzieren.

8. Vorrichtung nach Anspruch 7, dadurch **gekennzeichnet**, daß das zweite Ende (232, 234) des Gliedes in jedem der Wandler größer ist als das erste Ende (222, 224) des Gliedes, so daß die akustische Energie pro Flächeneinheit, die auf die optische Faser aufgebracht wird, größer ist als die akustische Energie pro Flächeneinheit, die in dem zweiten Ende des Glieds durch den Wandler angeregt wird.

9. Vorrichtung nach einem der Ansprüche 7 bis 8, dadurch **gekennzeichnet**, daß jeder der Wandler (242, 244) in dem Glied akustische Wellen mit Längsmoden anregt, die seitliche Kräfte an dem Umfang der Faser (200) erzeugen, wobei die seitlichen Kräfte in Phase und von etwa gleicher Amplitude sind und dadurch das Paar der Quetschkräfte erzeugen.

10. Vorrichtung nach Anspruch 9, dadurch **gekennzeichnet**, daß jeder der Wandler akustische Oberflächenwellen an dem zweiten Ende (232, 234) anregt, wobei das Glied die Energie der Oberflächenwellen umwandelt, um die akustischen Wellen mit Längsmode an dem ersten Ende (222, 224) des Gliedes zu erzeugen.

11. Vorrichtung nach einem der Ansprüche 7 bis 10, dadurch **gekennzeichnet**, daß das Glied einen Zylinder aufweist, der an dem zweiten Ende (242, 244) hohl ist und an dem ersten Ende (222, 224) voll ist, wobei der Übergang zwischen dem hohlen Ende und dem vollen Ende eine sanfte Verjüngung ist, und daß der Zylinder in jedem der akustischen Hörner (202, 204) mit einem akustischen Dämpfungsmaterial gefüllt ist, um Resonanzmoden in jedem der Hörner (202, 204) zu unterdrücken.

12. Vorrichtung nach einem der Ansprüche 1 bis 11, dadurch **gekennzeichnet**, daß die Orientierung des Quetschkräftepaares unter einem Winkel von im wesentlichen 45° in bezug auf die Achsen der Doppelbrechung der Faser ist.

13. Vorrichtung nach einem der Ansprüche 1 bis 12, dadurch **gekennzeichnet**, daß der Generator der Biegewelle wenigstens einen ersten Satz (402) und einen zweiten Satz (404) von PZTs aufweist, wobei die ersten und zweiten Sätze diametral gegenüber der Faser angeordnet sind, wobei die PZTs in jedem der Sätze übereinander gestapelt sind.

14. Vorrichtung nach einem der Ansprüche 1 bis 13, dadurch **gekennzeichnet**, daß die Ausbreitungsgeschwindigkeit der Biegewelle von den Querschnittsdimensionen der Faser abhängig ist, und wobei die Faser verjüngt ist, um zu veranlassen, daß die Ausbreitungsgeschwindigkeit längs der Länge der Faser variiert.

15. Vorrichtung nach einem der Ansprüche 1 bis 14, dadurch **gekennzeichnet**, daß die Wirksamkeit der Kopplung zwischen den beiden Moden von den Querschnittsdimensionen der Faser abhängig ist, wobei die Wirksamkeit für kleinere Durchmesser der Faser höher ist.

16. Vorrichtung nach einem der Ansprüche 1 bis 15, dadurch **gekennzeichnet**, daß die wandernde Biegewelle die niedrigste Mode der Gruppe von akustischen Biegewellen zweiter Ordnung aufweist.

17. Verfahren zum Koppeln der optischen Energie eines optischen Signals, das in der ersten Ausbreitungsmode mit einer ersten Frequenz und mit einer ersten Phasenausbreitungsgeschwindigkeit wandert, zu einer zweiten Ausbreitungsmode mit einer zweiten Frequenz und mit einer zweiten Phasenausbreitungsgeschwindigkeit, mit den Schritten:
- Eingeben des optischen Signals in ein erstes Ende einer optischen Faser (200), und
- Ausbreiten einer wandernden Biegewelle längs einer Länge der optischen Faser (200), wobei die Biegewelle auf die Faser einwirkt, wobei die Wellenlänge der Biegewelle so gewählt ist, daß sie im wesentlichen gleich der Schwebungslänge der Faser für das optische Signal ist,
dadurch **gekennzeichnet**, daß die optische Faser eine doppelbrechende Einzelmodenfaser ist, die erste und zweite Polarisationsmoden hat, daß die Biegewelle eine wandernde Biegewelle einer zweiten Ordnung ist, und daß das wandernde Kräftepaar die Faser so verformt, daß ein wanderndes periodisches seitliches Paar von Quetschkräften auf die Faser ausgeübt wird und einen Teil der optischen Energie in der ersten Polarisationsmode veranlaßt, zu der zweiten Polarisationsmode gekoppelt und in der Frequenz um eine Frequenzgröße verschoben zu werden, die gleich der Frequenz der Biegewelle ist

18. Verfahren zum Koppeln der optischen Energie zwischen optischen Ausbreitungsmoden in einer optischen Faser nach Anspruch 17, **gekennzeichnet** durch den Schritt des Aufbringens der periodischen Quetschkraft auf die Faser unter einem Winkel in bezug auf die Achsen der Doppelbrechung der Faser, wobei der Winkel vorzugsweise etwa 45° ist.

## Revendications

1. Dispositif de couplage d'énergie optique entre des modes de propagation optique dans une fibre optique, comportant :
une fibre optique (200, 400, 500, 662a, 662b) ayant un premier mode de propagation optique et un second mode de propagation optique pour des signaux optiques se propageant dans cette fibre ; et
un générateur (202, 204, 402, 404, 502, 504, 660, 661) pour produire une onde progressive de flexion dans la fibre optique, l'énergie de ladite onde progressive de flexion étant confinée dans la fibre optique, ladite onde progressive de flexion agissant sur la fibre, la longueur d'onde de ladite onde de flexion étant sensiblement égale à la longueur de battement de la fibre (200) pour lesdits signaux optiques;
caractérisé en ce que la fibre optique est une fibre monomode biréfringente ayant un premier et un second mode de polarisation, le générateur d'onde de flexion est un générateur d'onde de flexion du second ordre, pour produire dans la fibre une onde progressive de flexion du second ordre qui déforme la fibre par application d'un couple périodique de forces de compression latérale, et le générateur est agencé pour produire, pour ladite onde de flexion du second ordre, une longueur d'onde qui a pour effet que la lumière se transmet par couplage de l'un desdits modes à l'autre et se décale en fréquence.

2. Dispositif selon la revendication 1, caractérisé en ce que ledit générateur (202) comporte un générateur de signal (310, 507) agencé pour faire varier la fréquence de ladite onde de flexion.

3. Dispositif selon l'une des revendications 1 à 2, caractérisé en ce que l'énergie optique se propageant dans le premier mode de propagation a une première fréquence optique et une première vitesse de propagation de phase, et l'énergie optique se transmettant par couplage au second mode de propagation a une seconde fréquence optique et une seconde vitesse de propagation, la seconde fréquence optique étant sensiblement égale à la somme ou à la différence de la première fréquence optique et de la fréquence de l'onde de flexion.

4. Dispositif selon la revendication 3, caractérisé en ce que la seconde fréquence optique est égale à la première fréquence optique plus la fréquence de l'onde de flexion si l'énergie optique se propage dans le même sens que l'onde de flexion et si la première vitesse de propagation de phase est supérieure à la seconde vitesse de propagation de phase, et en ce que la seconde fréquence optique est égale à la première fréquence optique moins la fréquence de l'onde de flexion si l'énergie optique se propage dans le même sens que l'onde de flexion et si la première vitesse de phase est inférieure à la seconde vitesse de phase.

5. Dispositif selon l'une des revendications 1 à 4, caractérisé en ce que la longueur de la zone sur laquelle se produit un couplage substantiel est petite par rapport à la longueur de la fibre (200), l'emplacement de ladite zone étant variable le long de la fibre (200) lorsque la fréquence de l'onde de flexion varie.

6. Dispositif selon l'une des revendications 1 à 5, caractérisé en ce que ledit générateur de l'onde de flexion du second ordre comporte au moins une première (202, 502, 660) et une seconde corne acoustique (204, 504, 661), qui sont placées sur la fibre dans des positions sensiblement diamétralement opposées.

7. Dispositif selon la revendication 6, caractérisé en ce que chacune desdites cornes acoustiques (202, 204) comporte un élément allongé ayant une première extrémité (222, 224) couplée mécaniquement à la fibre optique et ayant une seconde extrémité (232, 234) disposée à l'opposé de ladite première extrémité (222, 224), les secondes extrémités (232, 234) de la première et de la seconde corne acoustique (202, 206) ayant respectivement sur elles un premier et un second transducteur piézo-électrique (PZT) (242, 244), lesdits transducteurs (242, 244) étant connectés audit générateur (310, 507) répondant à un signal électrique qui lui est appliqué pour engendrer une onde acoustique qui se propage de la seconde extrémité dudit élément à la première extrémité dudit élément pour induire ladite onde de flexion dans la fibre optique (200).

8. Dispositif selon la revendication 7, caractérisé en ce que la seconde extrémité (232, 234) dudit élément dans chacun des transducteurs est plus grande que la première extrémité (222, 224) dudit élément, de sorte que l'énergie acoustique par unité de surface appliquée à la fibre optique est plus grande que l'énergie acoustique par unité de surface excitée dans la seconde extrémité dudit élément par ledit transducteur.

9. Dispositif selon l'une des revendications 7 à 8, caractérisé en ce que chacun desdits transducteurs (242, 244) excite dans ledit élément des ondes acoustiques de mode longitudinal qui produisent des forces latérales sur la périphérie de la fibre (200), lesdites forces latérales étant en phase et d'amplitude approximativement égale, engendrant ainsi ledit couple de forces de compression.

10. Dispositif selon la revendication 9, caractérisé en ce que chacun desdits transducteurs excite des ondes acoustiques de surface à ladite seconde extrémité (232, 234), ledit élément convertissant l'énergie desdites ondes de surface pour produire lesdites ondes acoustiques de mode longitudinal à la première extrémité (222, 224) de l'élément.

11. Dispositif selon l'une des revendications 7 à 10, caractérisé en ce que ledit élément comporte un cylindre qui est creux à ladite seconde extrémité (242, 244) et plein à ladite première extrémité (222, 224), la transition entre l'extrémité creuse et l'extrémité pleine étant formée par une conicité régulière, et en ce que ledit cylindre de chacune des cornes acoustiques (202, 204) est rempli d'un matériau d'amortissement acoustique pour supprimer des modes résonnants dans chacune des cornes (202, 204).

12. Dispositif selon l'une des revendications 1 à 11, caractérisé en ce que ledit couple de forces de compression est orienté sensiblement sous un angle de 45° par rapport aux axes de biréfringence de la fibre .

13. Dispositif selon l'une des revendications 1 à 12, caractérisé en ce que ledit générateur d'onde de flexion comporte au moins un premier jeu (402) et un second jeu (404) de transducteurs piézo-électriques, lesdits premier et second jeux ayant des positions diamétralement opposées contre la fibre, lesdits transducteurs étant empilés l'un sur l'autre dans chacun desdits jeux.

14. Dispositif selon l'une des revendications 1 à 13, caractérisé en ce que la vitesse de propagation de l'onde de flexion dépend des dimensions de la section transversale de la fibre, et dans lequel la fibre présente une conicité pour faire varier ladite vitesse de propagation sur la longueur de la fibre.

15. Dispositif selon l'une des revendications 1 à 14, caractérisé en ce que l'efficacité de couplage entre lesdits deux modes dépend des dimensions de la section transversale de la fibre, ladite efficacité étant plus élevée pour de plus petits diamètres de la fibre.

16. Dispositif selon l'une des revendications 1 à 15, caractérisé en ce que ladite onde progressive de flexion comprend le mode le plus bas du groupe d'ondes acoustiques de flexion du second ordre.

17. Procédé de couplage de l'énergie optique d'un signal optique se propageant dans le premier mode de propagation avec une première fréquence et une première vitesse de propagation de phase, à un second mode de propagation avec une seconde fréquence et une seconde vitesse de propagation de phase, comportant les étapes de :
introduction dudit signal optique dans une première extrémité d'une fibre optique (200); et
propagation d'une onde progressive de flexion le long d'un tronçon de ladite fibre optique (200), ladite onde de flexion agissant sur la fibre, la longueur d'onde de ladite onde de flexion étant choisie pour être sensiblement égale à la longueur de battement de la fibre pour ledit signal optique;
caractérisé en ce que la fibre optique est une fibre monomode biréfringente ayant un premier et un second mode de polarisation, l'onde de flexion est une onde progressive de flexion du second ordre, et ledit couple progressif de forces déforme la fibre en lui appliquant un couple périodique progressif de forces de compression latérale et a pour effet qu'une partie de l'énergie optique du premier mode de polarisation se transmet par couplage au second mode de polarisation et se décale en fréquence dans une mesure égale à la fréquence de l'onde de flexion.

18. Procédé de couplage de ladite énergie optique entre des modes de propagation optique dans une fibre optique selon la revendication 17, caractérisé en outre par l'étape d'application de ladite force périodique de compression à la fibre sous un angle par rapport aux axes de biréfringence de la fibre, ledit angle valant de préférence environ 45°.
